(19)

Europäisches
Patentamt
European
Patent Office
Office européen
des brevets

(11) **EP 1 968 081 A1**

(12) **EUROPEAN PATENT APPLICATION**

(43) Date of publication:
**10.09.2008 Bulletin 2008/37**

(51) Int Cl.:
*H01F 41/02* *(2006.01)* *H02K 1/27* *(2006.01)*
*H02K 29/03* *(2006.01)*

(21) Application number: **08152392.0**

(22) Date of filing: **06.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.03.2007 JP 2007059710**

(71) Applicant: **JTEKT CORPORATION**
**Chuo-ku**
**Osaka-shi**
**Osaka 542-8502 (JP)**

(72) Inventors:
• **Niguchi, Noboru**
  **Osaka 542-8502 (JP)**
• **Inayama, Hirohide**
  **Osaka 542-8502 (JP)**

(74) Representative: **TBK-Patent**
**Bavariaring 4-6**
**80336 München (DE)**

(54) **Brushless motor and electric power steering device having brushless motor**

(57)     In a three-phase brushless motor, a rotor has a stacked structure including first to third stages which include segment magnets to which a skewprocess is applied. When the number of poles P in the circumferential direction is set to P, an angle of skew is set to $\Delta$ = 360/ (6P/2) [deg]. That is, the magnet segments are respectively arranged so that the magnet segment of the second stage is shifted by a rotating angle of $\Delta$ /3 in the circumferential direction from the magnet segment of the first stage and the magnet segment of the third stage is shifted by a rotating angle of 2$\Delta$/3 in the circumferential direction.

*FIG. 1*

EP 1 968 081 A1

**Description**

BACKGROUND OF THE INVENTION

The present invention relates to a permanent magnet field type brushless motor and an electric power steering device having this brushless motor.

Generally, an electric power steering device has been used in which an electric motor is driven in accordance with a steering torque applied to a handle (a steering wheel) by a driver to give a steering assist force to a steering mechanism. A brushless motor generally used in such an electric power steering device is an electric motor of a permanent magnetic field type including a stator having a winding and a rotor provided with a permanent magnet, and most of the brushless motors are driven by a three-phase electric power.

A steering feeling of a vehicle on which the electric power steering device is mounted is greatly affected by the characteristics of a motor as a driving source thereof. The deterioration of the steering feeling due to a pulsation generated in the output torque of the motor is pointed out. The pulsation is roughly classified into a pulsation (refer it to as a "cogging torque") due to a structural factor such as the number of poles or the number of slots in the motor and a pulsation (here, refer it to as a "torque ripple") resulting from the fact that a waveform of an induced electromotive force in the motor deviates from an ideal waveform. To suppress such a pulsation, for instance, a countermeasure (called a "skew") has been hitherto taken that boundaries of magnetic poles of a permanent magnet in the rotor are inclined from an axial direction (for instance, JP-A-2004-180491, JP-A-2004-248422, etc.).

In the brushless motor as the driving source of the electric power steering device, since a segment magnet has a cost per unit weight lower than that of a ring magnet, the segment magnet may be sometimes used. In this case, a skew cannot be applied by a magnetization, the permanent magnet in the rotor is divided into a plurality of stages in the axial direction and positions in the circumferential direction are respectively shifted between the stages to give the skew, that is, to cope with the above-described torque pulsation by a lamination is a main countermeasure for reducing the cogging torque or the torque ripple.

However, in the brushless motor using the above-described segment magnet, since the number of stacks of the permanent magnets exerts an influence on the cogging torque or the like, both the cogging torque and the torque ripple cannot be adequately suppressed only by setting a skew angle.

SUMMARY OF THE INVENTION

Thus, it is an object of the present invention to provide a brushless motor using a permanent magnet such as a segment magnet in which both a cogging torque and a torque ripple are adequately suppressed.

A first invention concerns a permanent magnet field type brushless motor comprising:

a rotor including an annular magnet part in which different magnetic poles alternately appear in a circumferential direction; and
a stator arranged concentrically with the rotor and including a three-phase winding,

wherein the magnet part is divided into N stages in an axial direction of the rotor and positions thereof in the circumferential direction are respectively shifted between the stages to give a skew of a prescribed angle Δ to the magnet part, the number N of the stages of the magnet part is 3 or more and the prescribed angle Δ is given by a below-described equation,

$$\Delta = 360/(6 \times P/2)$$

where P is the number of the magnetic poles in the circumferential direction.

A second invention concerns a brushless motor according to the first invention characterized in that the stages adjacent in the axial direction of the rotor in the magnet part are shifted by a rotating angle of Δ/N in the circumferential direction from each other.

A third invention concerns a brushless motor according to the first invention characterized in that each stage of the magnet part includes a plurality of magnet segments arranged in an annular form in the circumferential direction.

A fourth invention concerns a brushless motor according to the first invention characterized in that each stage of the magnet part includes a ring magnet integrally formed in a ring shape and magnetized so that the different magnetic poles alternately appear in the circumferential direction.

A fifth invention concerns an electric power steering device comprising: the brushless motor according to claim 1, wherein the brushless motor is driven in accordance with a steering operation of a vehicle to give a steering assist force to a steering mechanism of a vehicle.

According to the first invention, since the magnet part of the rotor is formed in a stacked structure to apply the skew of the prescribed angle $\Delta = 360/(6 \times P/2)$, a pentagonal harmonic component and a heptagonal harmonic component of an induced voltage in the winding of the stator are sufficiently reduced. As a result, a hexagonal component of a torque ripple forming a main part of a torque pulsation in the three-phase brushless motor is adequately suppressed. Further, for any of the combinations of the number of the magnetic poles and the number of slots that can be selected in the three-phase brushless motor, the above-described prescribed angle $\Delta$ is a value integer times as large as a cycle of a basic wave of a cogging torque 360/R (R is the least common multiple of the number of the magnetic poles and the number of the slots). Therefore, a basic wave component of the cogging torque is also cancelled by the above-described skew process. Further, since the number of the stages of the magnet part (the number of stacks) N is 3 or more, a secondary harmonic component of the cogging torque can be cancelled. Accordingly, in the three-phase brushless motor of the permanent magnet field type, both the cogging torque and the torque ripple can be adequately suppressed.

According to the second invention, the stages adjacent in the axial direction of the rotor in the magnet part are shifted by a rotating angle of $\Delta/N$ in the circumferential direction of the rotor from each other so that a skew angle is set to $\Delta = 360/(6 \times P/2)$ in the magnet part. In accordance with this skew process, in the three-phase brushless motor of the permanent magnet field type, both the cogging torque and the torque ripple can be adequately suppressed.

According to the third invention, in the three-phase brushless motor using segment magnets, the magnet segments arranged in an annular shape are stacked in a stacked structure of three stages or more to set the skew angle $\Delta = 360/(6 \times P/2)$. Thus, both the cogging torque and the torque ripple can be adequately suppressed.

According to the fourth invention, in the three-phase brushless motor using the ring magnet, three or more ring magnets are stacked in the stacked structure to set the skew angle $\Delta = 360/(6 \times P/2)$. Thus, both the cogging torque and the torque ripple can be adequately suppressed.

According to the fifth invention, in the electric power steering device using the permanent magnet field type three-phase brushless motor, since the cogging torque and the torque ripple of the brushless motor are adequately suppressed, a steering feeling can be improved.

BRIEF DESCRIPTION OF THE DRAWINGS

Fig. 1 is a schematic diagram showing both a structure of an electric power steering device including a brushless motor according to one embodiment of the present invention and a structure of a vehicle associated therewith.
Fig. 2 is a cross-sectional view showing the structure of the brushless motor according to the embodiment.
Fig. 3 is a schematic perspective view for explaining the arrangement of magnets in a rotor of the brushless motor according to the embodiment.
Fig. 4 is a sectional view for explaining the arrangement of each stage of segment magnets in the rotor of the brushless motor according to the embodiment.
Fig. 5 is a waveform diagram of a cogging torque including a secondary harmonic component.
Fig. 6 is a waveform diagram showing an effect of canceling the cogging torque by a skew process in the rotor of the brushless motor, for the case of a two-stage stacked structure and the case of a three-stage stacked structure.
Fig. 7 is a diagram showing the number of basic waves of the cogging torque and the number of sixth order component waves of a torque ripple for one rotation in a three-phase brushless motor for various kinds of combinations of the number of poles and the number of slots.
Fig. 8A is a plan view showing a rotor in a brushless motor according to a modified example of the embodiment and Fig. 8B is a side view thereof.

DETAILED DESCRIPTION OF PREFERRED EMBODIMENTS

Now, referring to the attached drawings, an embodiment of the present invention will be described below.

<1. Schematic structure of electric power steering device>

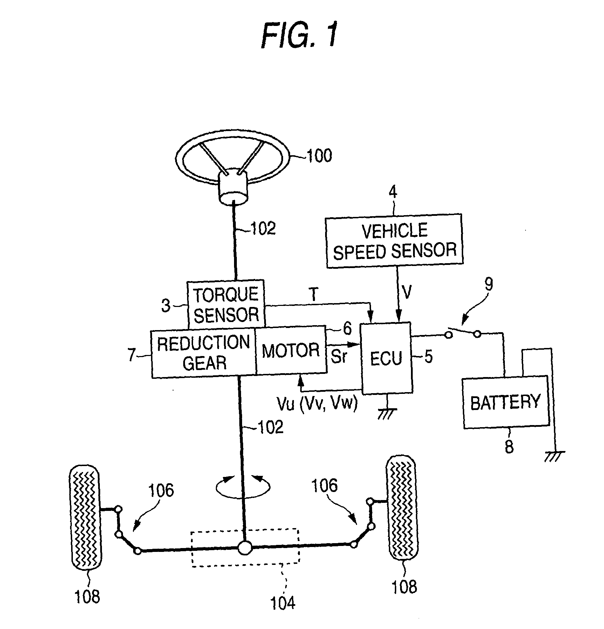

Fig. 1 is a schematic diagram showing a structure of an electric power steering device including a brushless motor 6 according to one embodiment of the present invention and a structure of a vehicle associated therewith. The electric power steering device includes a steering shaft 102 having one end attached to a handle (a steering wheel) 100 as an operating unit for steering, a rack pinion mechanism 104 connected to the other end of the steering shaft 102, a torque sensor 3 for detecting a steering torque applied to the steering shaft 102 by the operation of the handle 100, the brushless motor 6 for generating a steering assist force for reducing a load of a driver in operating the handle (a steering operation), a reduction gear 7 for transmitting the steering assist force to the steering shaft 102 and an electronic control unit (ECU) 5 for receiving the supply of a power from a battery 8 mounted on a vehicle through an ignition switch 9 to control the driving of the brushless motor 6 in accordance with a sensor signal from the torque sensor 3 and a vehicle speed sensor 4.

When the driver operates the handle 100 in the vehicle on which the electric power steering device is mounted, the steering torque by the operation is detected by the torque sensor 3 and a signal T showing the detected steering torque is inputted to the ECU 5. Further, a signal V showing a vehicle speed detected by the vehicle speed sensor 4 or a signal Sr showing a rotating position of a rotor detected by a resolver incorporated in the brushless motor 6 are inputted to the ECU 5. The ECU 5 generates driving voltages Vu, Vv and Vw on the basis of these detecting signals T, V and Sr and applies the driving voltages to the brushless motor 6. Thus, the brushless motor 6 generates the steering assist force. This steering assist force is applied to the steering shaft 102 through the reduction gear 7 to reduce the load of the driver in the steering operation. That is, the sum of the steering torque applied by operating the handle and the steering assist force generated by the brushless motor 6 is applied to the rack pinion mechanism 104 through the steering shaft 102. When a pinion shaft rotates, the rotation is converted into a reciprocating movement of a rack shaft by the rack pinion mechanism 104. Both ends of the rack shaft are connected to wheels 108 through connecting members 106 including tie rods and knuckle arms. The directions of the wheels 108 are changed in accordance with the reciprocating movement of the rack shaft.

<2. Structure of motor>

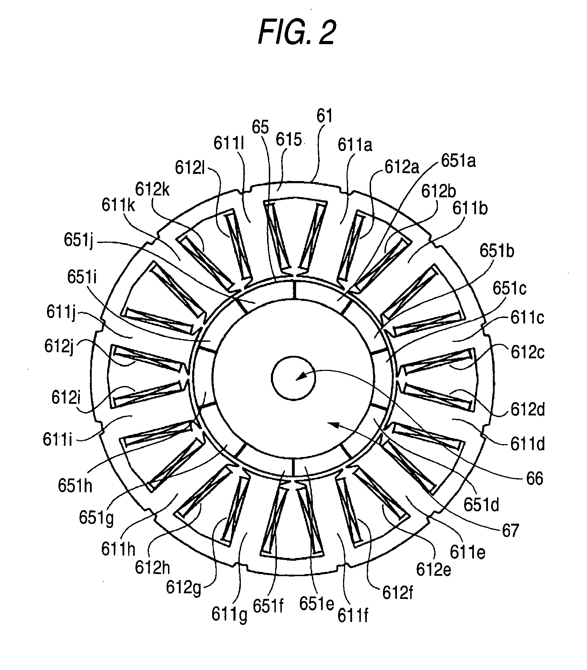

Fig. 2 is a sectional view of the brushless motor 6 according to this embodiment. As shown in Fig. 2, the brushless motor 6 is a permanent magnet field type motor and includes a rotor 65 rotating on an axis of a motor shaft 66 as a rotating shaft and a stator 61 provided so as to surround the rotor 65 with a narrow gap (an air gap) between them.

The rotor 65 has a structure that 10 permanent magnets 651a to 651j are arranged in the circumferential direction to have 10 poles in the circumferential direction. The permanent magnets 651a to 651j are segment magnets forming an annular magnet part and arranged so that N poles and S poles are alternately arranged in the circumferential direction. The number of magnet poles of the permanent magnets in the direction of the circumferential direction of the rotor 65 is simply referred to as the "number of poles", hereinafter. The plurality of segment magnets forming the above-described magnet part are respectively divided into three stages in the axial direction of the rotor 6-5 to apply a skew as described below.

The stator 61 includes a tubular yoke 615 and 12 teeth 611a to 6111 provided so as to protrude toward the motor shaft 66 from the inner peripheral surface of the yoke 615. Corresponding windings 612a to 6121 are wound on the teeth 611a to 6111. The number of the teeth of the stator 61 is equal to the number of slots formed between the teeth. Accordingly, the brushless motor 6 according to this embodiment is the permanent magnet field type motor having 10 poles and 12 slots.

Here, specifically, the windings 612a to 6121 are suitably connected to a three-phase electric power source not shown in the drawing so that three sets of four windings are respectively driven by an electric power of a U-phase, a V-phase or a W-phase. The three-phase electric power source is realized by an inverter for generating an AC electric power from the battery 8. As the inverter, for instance, a three-phase PWM voltage type inverter formed by using a switching element of an MOS transistor for an electric power is incorporated in the ECU 5. The three-phase voltages Vu, Vv and Vw generated by such an inverter are applied to the windings 612a to 6121 in the stator 61 of the brushless motor 6 from the ECU 5. Thus, when an electric current is supplied to the windings 612a to 6121 to generate a rotating magnetic field in the stator 61, motor torque is generated by an interaction of the rotating magnetic field and the permanent magnets 651a to 651j in the rotor 65.

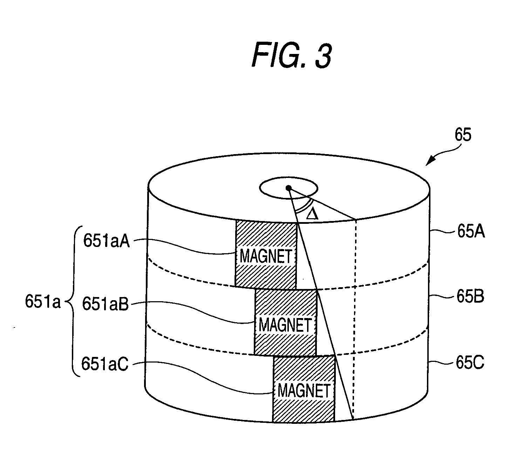

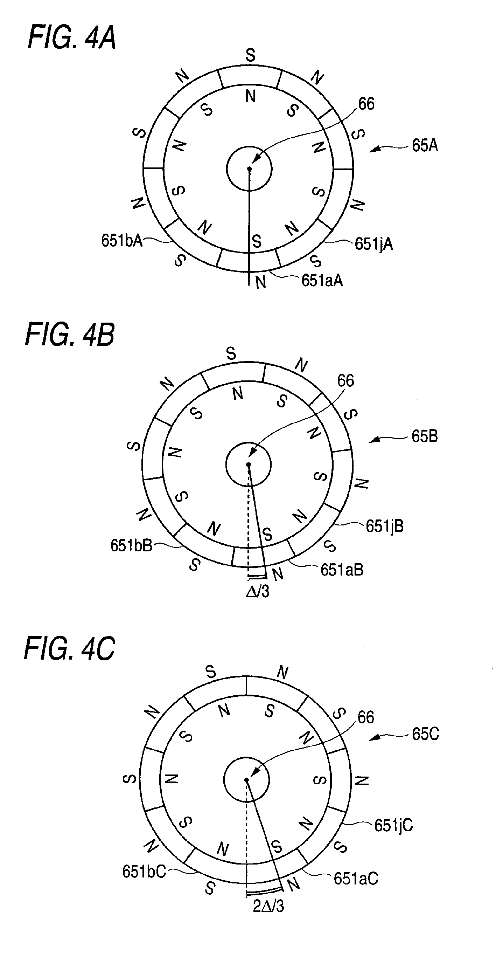

Now, referring to Figs. 3 and 4, the structure of the rotor 65 in the brushless motor 6 according to this embodiment will be described below in detail. Fig. 3 is a schematic perspective view for explaining the arrangement of the magnets (the segment magnets) in the rotor 65 of the brushless motor 6. Fig. 4 is a sectional view showing the arrangement of the magnets in each of stages.

The rotor 65 includes a core 67 composed of, for instance, a laminated steel plate and the plurality of magnets 651a to 651j fixed to the outer peripheral surface of the core 67 and arranged at equal intervals in the circumferential direction so that the N poles and the S poles alternately appear. As shown in Fig. 3, the plurality of magnets 651a to 651j are respectively divided into three stages 65A, 65B and 65C in the axial direction of rotation. Here, the magnet designated by reference numeral "651x" (x = a, b, c,..., j) is composed of three magnet segments 651xA, 651xB and 651xC provided so as to be arranged obliquely with respect to the axial direction of rotation (it is assumed that the three magnet segments 651xA, 651xB and 651xC form one set of magnet 651x, hereinafter). The magnet segments 651aA, 651bA,..., 651jA form the first stage 65A, the magnet segments 651aB, 651bB,..., 651jB form the second stage 65B and the magnet segments 651aC, 651bC,..., 651jC form the third stage 65C.

As shown in Fig.3, in this embodiment, assuming that a line segment along the direction in which the three magnet segments 651xA, 651xB and 651xC forming the magnet 651x (x = a, b, c,..., j) of each set are arranged is provided on a side surface of the rotor 65, the magnet segments are respectively arranged so that one end and the other end of the line segment form a prescribed angle ∆ with respect to an axis of rotation. That is, the magnet segments 651xA, 651xB and 651xC of the same set are shifted by a rotating angle ∆ /N in the circumferential direction from each other between the adjacent stages (N is number of stages). Specifically, as shown in Fig. 4, the magnet segments 651aB to 651jB forming the second stage 65B are respectively shifted by the rotating angle of ∆ /3 in the circumferential direction from the magnet segments 651aA to 651jA forming the first stage 65A and the magnet segments 651aC to 651jC forming the third stage 65C are respectively shifted by the rotating angle of 2∆ /3 in the circumferential direction from the magnet segments 651aA to 651jA. In Fig. 3, only the three magnet segments 651aA, 651aB and 651aC forming the magnet 651a of the one set are shown and other magnet segments are omitted.

According to this embodiment, in the rotor 65 constructed as described above, namely, in the rotor 65 having a three-layer stacked structure with an angle of skew ∆, to suppress a pulsation component included in a torque (refer it to as a "motor torque", hereinafter) generated by the brushless motor 6, the angle of skew ∆ is set as shown by a below-described equation.

$$\Delta = 360/(6 \times P/2) \text{ [deg]} \qquad \dots (1)$$

Here, in the above-described equation, the angle of skew ∆ is expressed by a mechanical angle (when the angle is not especially mentioned, it is assumed that the angle is expressed by the mechanical angle). P represents the number of poles of the brushless motor 6. As described above, since the brushless motor 6 is the permanent magnet field type motor having 10 poles and 12 slots, P = 10.

<3. Operation and effect>

Generally, a pulsation (refer it simply to as a "torque pulsation", hereinafter) included in the output torque of the electric motor is roughly classified into a pulsation (cogging torque) due to a structural factor such as the number of poles or the number of slots in the motor and a pulsation (torque ripple) resulting from the fact that a waveform of an induced electromotive force (induced voltage) in the motor deviates from an ideal waveform (in the case of a three-phase sine wave driven brushless motor, a sine wave of each phase).

<3.1 Suppression of torque ripple>

Initially, the latter of the torque pulsation, that is, the pulsation resulting from a distortion of the inducedvoltage (herein, refer it to as the "torque ripple) is investigated. The motor torque is represented by the product of a torque constant Kt and a motor current and the torque constant Kt is equal to a constant Ke of a counter electromotive force (a constant of induced voltage). Accordingly, when the rotating speed of the motor is constant, the torque (the motor torque) generated by the brushless motor is proportional to the sum of the products of the induced voltage and the current of the phases of the brushless motor respectively. That is, in the case of the brushless motor 6 of the three phases including the U phase, the V phase and the W phase, the motor torque Tm is expressed by a below-described equation.

$$Tm = C(Eu \cdot Iu + Ev \cdot Iv + Ew \cdot Iw) \qquad \dots\dots (2)$$

Here, C is a constant. Eu, Ev and Ew are respectively induced voltages of the U phase, the V phase and the W phase. Iu, Iv and Iw are respectively the currents of the U phase, the v phase and the W phase.

Now, it is assumed that this brushless motor is controlled to generate a constant torque. In this case, the U phase, V phase and W phase currents can be respectively represented by below-described equations.

$$Iu = Io \cdot \sin\theta \qquad \dots (3a)$$

$$Iv = Io \cdot \sin(\theta - 2/3\pi) \quad \ldots \quad (3b)$$

$$Iw = Io \cdot \sin(\theta - 4/3\pi) \quad \ldots \quad (3c)$$

Here, Io designates a constant and $\theta$ designates an electrical angle.

The induced voltages Eu, Ev and Ew of the U phase, the V phase and the W phase respectively include basic wave components and odd number order harmonic components that have the electrical angle of 360 ° as one cycle. Assuming that the induced voltages Eu, Ev and Ew of the phases are respectively composed only of 3k th order harmonic components (k = 1, 3, 5,...), the induced voltages Eu, Ev and Ew are respectively represented by below-described equations.

$$Eu = Vo \cdot \sin 3k\theta \quad \ldots \quad (4a)$$

$$Ev = Vo \cdot \sin 3k(\theta - 2/3\pi) \quad \ldots \quad (4b)$$

$$Ew = Vo \cdot \sin 3k(\theta - 4/3\pi) \quad \ldots \quad (4c)$$

Here, Vo is a constant. When these equations (4a) to (4c) and the equations (3a) to 3 (c) representing the currents of the respective phases are substituted for the equation (2), a below-described result is obtained.

$$Tm = C \cdot Vo \cdot Io\{\sin\theta \cdot \sin(3k\theta) +$$
$$\sin(\theta - 2/3\pi) \cdot \sin 3k(\theta - 2/3\pi) +$$
$$\sin(\theta - 4/3\pi) \cdot \sin 3k(\theta - 4/3\pi)\} \quad \ldots \quad (5)$$

Here, when the right side of the above-described equation (5) is transformed, "0" is obtained. This means that the 3k th order harmonic component of the induced voltage does not affect the motor torque Tm.

On the other hand, assuming that the induced voltages Eu, Ev and Ew of the phases are respectively composed only of 3k-1 th order harmonic components (k = 2, 4, 6,...), the induced voltages Eu, Ev and Ew are respectively represented by below-described equations.

$$Eu = Voa \cdot \sin(3k-1)\theta \quad \ldots \quad (6a)$$

$$Ev = Voa \cdot \sin(3k-1)(\theta - 2/3\pi) \quad \ldots \quad (6b)$$

$$Ew = Voa \cdot \sin(3k-1)(\theta - 4/3\pi) \quad \ldots \quad (6c)$$

Here, Voa is a constant. In this case, the motor torque Tm is expressed by a below-described equation.

$$Tm = C \cdot Voa \cdot Io\{ \sin\theta \cdot \sin(3k-1)\theta +$$
$$\sin(\theta-2/3\pi) \cdot \sin(3k-1)(\theta-2/3\pi) +$$
$$\sin(\theta-4/3\pi) \cdot \sin(3k-1)(\theta-4/3\pi) \}$$
$$= -(3/2)C \cdot Voa \cdot Io \cdot \cos 3k\theta \quad \dots \quad (7)$$

This means that the 3k-1 th order harmonic component of the induced voltage generates the 3k th order component of the torque ripple (the torque ripple of a frequency 3k times as high as a fundamental frequency of the induced voltage).

Further, assuming that the induced voltages Eu, Ev and Ew of the phases are respectively composed only of 3k+1 th order harmonic components (k = 2, 4, 6,...), the induced voltages Eu, Ev and Ew are respectively represented by below-described equations.

$$Eu = Vob \cdot \sin(3k+1)\theta \quad \dots \quad (8a)$$

$$Ev = Vob \cdot \sin(3k+1)(\theta-2/3\pi) \quad \dots \quad (8b)$$

$$Ew = Vob \cdot \sin(3k+1)(\theta-4/3\pi) \quad \dots \quad (8c)$$

Here, Vob is a constant. In this case, the motor torque Tm is expressed by a below-described equation.

$$Tm = C \cdot Vob \cdot Io\{ \sin\theta \cdot \sin(3k+1)\theta +$$
$$\sin(\theta-2/3\pi) \cdot \sin(3k+1)(\theta-2/3\pi) +$$
$$\sin(\theta-4/3\pi) \cdot \sin(3k+1)(\theta-4/3\pi) \}$$
$$= (3/2)C \cdot Vob \cdot Io \cdot \cos 3k\theta \quad \dots \quad (9)$$

This means that the 3k+1 th order harmonic component of the induced voltage also generates the 3k th order component of the torque ripple. Since the 3k-1 th order harmonic component and the 3k+1 th order harmonic component actually included in the induced voltage have opposite symbols (plus and minus) to each other (plus and minus), the 3 k th order component of the torque ripple by the 3k-1 th order harmonic component of the induced voltage and the 3 k th order component of the torque ripple by the 3k+1 th order harmonic component of the induced voltage do not cancel with each other.

The torque ripple forming the torque pulsation is composed of the 3k th order component (k = 2, 4, 6,...) of the torque ripple from the above-described equations (7) and (9). As k becomes larger, the 3k±1 th order harmonic component of the induced voltage becomes abruptly smaller. Therefore, the 3k th order component of the torque ripple when k = 2, that is, a sixth order component is the largest, and the 3k th order component of the torque ripple corresponding to k = 4, 6, ... is sufficiently small. That is, in the pulsation generated in the motor torque resulting from the distortion of the induced voltage, the sixth order component of the torque ripple generated by a fifth order harmonic component and a seventh order harmonic component of the induced voltage is dominant.

As compared therewith, in this embodiment, a skew is applied to the rotor 65 so as to have the angle of skew Δ shown by the equation (1) as described above. In accordance with such a skew process, the fifth order harmonic component and the seventh order harmonic component of the induced voltage can be greatly reduced. Now, this point will be described below.

Generally, in the permanent magnet field type brushless motor as in this embodiment, when the skew is applied to the magnet of the rotor, a skew coefficient Ks showing the reduction rate of the harmonic component of the induced voltage is given by a below-described equation (for instance, see JP-A-2004-180491).

$$Ks = sin(k \cdot \alpha s/2)/(k \cdot \alpha s/2) \quad \dots (10)$$

The above-described equation (10) shows what degree of a k th order harmonic component of the induced voltage is reduced when the skew is applied to the magnet of the rotor in comparison with a case that the skew is not applied. $\alpha s$ shows the angle of skew represented by an electrical angle by using rad (radian) as a unit. On the other hand, the angle of skew $\Delta$ in this embodiment shown in Fig.3 is represented by a mechanical angle by using deg (degree) as a unit. Accordingly,

$$\alpha s = 2\pi(\Delta \cdot P/2)/360 \quad \dots (11)$$

When the equation (1) is substituted for the equation (11), a below-described result is obtained.

$$\alpha s = \pi/3 \quad \dots (12)$$

Thus, when the angle of skew $\Delta$ is given by the equation (1) as in this embodiment, the skew coefficient Ks is expressed by a below-described equation.

$$Ks = sin(k \cdot \pi/6)/(k \cdot \pi/6) \quad \dots (13)$$

(having no connection with the number of poles P)

In accordance with the equation (13), in this embodiment, the skew coefficient Ks to the fifth order harmonic component of the induced voltage is expressed by a below-described equation.

$$Ks = sin(5\pi/6)/(5\pi/6) = 3/(5\pi) \quad \dots (14)$$

The skew coefficient Ks to the seventh order harmonic component of the induced voltage is expressed by a below-described equation.

$$Ks = sin(7\pi/6)/(7\pi/6) = -3/(7\pi) \quad \dots (15)$$

In accordance with the above-described equations (14) and (15), when the angle of skew $\Delta$ is given by the equation (1) as in this embodiment, it can be found that both the fifth order harmonic component and the seventh order harmonic component are greatly reduced. Accordingly, the sixth order component of the torque ripple is considerably reduced. As described above, since in the pulsation generated in the motor torque resulting from the distortion of the induced voltage, the sixth order component of the torque ripple is dominant, the torque ripple can be sufficiently suppressed in this embodiment. In accordance with the above-described equation (13), since a 11th order harmonic component and a 13th order harmonic component of the induced voltage are extremely reduced, a 12th order component of the torque ripple is also suppressed in this embodiment.

<3.2 Suppression of cogging torque>

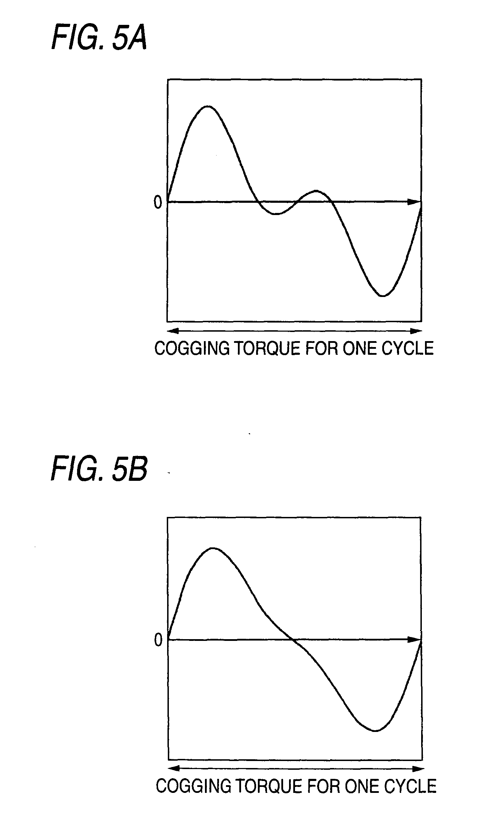

Now, of the pulsations in the motor torque, the pulsation generated due to the structural factor such as the number of poles or the number of slots in the motor, that is, the cogging torque will be investigated. Assuming that the least common number of the number of poles P and the number of slots S is R, the cogging torque generated in the permanent magnet field type brushless motor as in this embodiment has a cycle corresponding to 360/R [deg] in the mechanical angle. However, other than a basic wave corresponding to the cycle 360/R, secondary harmonic components are generally included in the cogging torque. A waveform of the cogging torque for one cycle is shown in Figs. 5A and 5B (Fig. 5B shows a waveform in which the content rate of the secondary harmonic components of the cogging torque is lower than that of Fig. 5A).

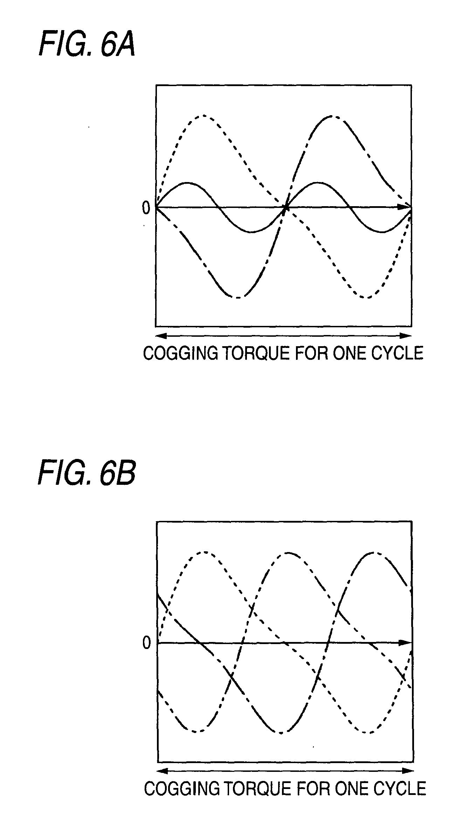

Generally, when the skew is applied by the stacked structure in the brushless motor using the segment magnets, assuming that the number of divisions of the magnet in the rotor in the axial direction of rotor, that is, the number of stacks is 2, as shown in Fig. 6A, the cogging torque (in the drawing, corresponding to a waveform shown by a dotted line) corresponding to the magnet of the first stage and the cogging torque (in the drawing, corresponding to a waveform shown by a dashed line) corresponding to the magnet of the second stage are not completely cancelled and the cogging torque (in the drawing, corresponding to a waveform shown by a full line) corresponding to the secondary harmonic component remains.

As compared therewith, in this embodiment, since the number of stacked stages is 3 as described above, as shown in Fig. 6B, the cogging torque (in the drawing, corresponding to a waveform shown by a dotted line) corresponding to the magnet of the first stage, the cogging torque (in the drawing, corresponding to a waveform shown by a dashed line) corresponding to the magnet of the second stage and the cogging torque (in the drawing, a waveform shown by a two-dot chain line) corresponding to the magnet of the third stage are mutually cancelled. The cogging torque corresponding to the secondary harmonic component does not remain.

As described below, when the number of stacked stages of the magnet in the rotor is N, the harmonic component of an order integer times as large as N included in one cycle of the cogging torque (of a basic wave) cannot be cancelled. Now, assuming that the k th order harmonic component of the cogging torque corresponding to the magnet of a j th stage is shown by "Tc(j, k)", Tc (j, k) can be expressed by a below-described equation. $Tc(j, k) = Cg \cdot \sin k\{\theta - 360(j-1)/N\}$ $(j = 1, 2, ..., N)$. Here, Cg is a constant. $\theta$ is an angle when one cycle (360 /R in the mechanical angle) of the basic wave of the cogging torque is considered to be 360°. When it is assumed that the total sum of the k th order harmonic components of the cogging torque respectively corresponding to the magnets of the stages is designated by a symbol "Tck", Tck is represented by a below-described equation.

$$Tck = Tc(1,k) + Tc(2,k) + \ldots + Tc(N,k)$$
$$= Cg[\sin(k \cdot \theta) + \sin k(\theta - 360 \cdot 1/N) + \sin k(\theta - 360 \cdot 2/N) +$$
$$\ldots + \sin k\{\theta - 360(N-2)/N\} + \sin k\{\theta - 360(N-1)/N\}] \quad \ldots \quad (16)$$

Here, assuming that k is a value integer times as large as the number of staked stages N, Tck is expressed by a below-described equation.

$$Tck = Cg \cdot N \cdot \sin(k \cdot \theta)$$

This means that the harmonic component of an order integer times as large as N in the cogging torque cannot be cancelled by the skew process by the segment magnets that are stacked to N stages.

On the other hand, when k is not a value integer times as large as the number of stacked stages N and $k = n \cdot N + m$ or $k = m$ (n is a natural number and m is an integer satisfying a relation of $1 \leq m \leq N-1$), Tck is represented by a below-described equation.

$$Tck = Cg[\sin(k \cdot \theta) + \sin(k \cdot \theta - m360 \cdot 1/N) +$$
$$\sin(k \cdot \theta - m360 \cdot 2/N) + \ldots + \sin\{k \cdot \theta - m360(N-2)/N\} +$$
$$\sin\{k \cdot \theta - m360(N-1)/N\}] = 0 \quad \ldots \quad (17)$$

This indicates that when an angle of skew $\Delta c$ (mechanical angle) given by a below-described equation is set in the segment magnets stacked to N stages, the harmonic component of an order smaller than N and the harmonic component of other order than the order integer times as large as N are cancelled in addition to the basic wave component of the cogging torque (here, R designates the least common multiple of the number of poles P and the number of slots S as

described above).

$$\Delta c = 360/R \qquad \dots (18)$$

Accordingly, when the number of stacked stages N is set to 3 (Fig. 3 and Fig. 4) as in this embodiment and the angle of skew given by the equation (18) is set, not only the basic wave component of the cogging torque, but also the secondary harmonic component is cancelled. Further, other harmonic components of other order than multiples of 3 in the cogging torque are also cancelled.

Now, the relation between the angle of skew $\Delta c$ shown by the equation (18) and the angle of skew $\Delta$ by the equation (1) in this embodiment will be described below. When the number of poles P is 10 and the number of slots S is 12 as in this embodiment (Fig. 2), the least common multiple R of them is 60. Thus, when the angle of skew is set to $\Delta c = 360/ 60 = 6$ [deg], the cogging torque can be suppressed. As compared therewith, in the skew process in this embodiment, the angle of skew is set to a value $\Delta$ obtained by substituting P = 10 for the equation (1). Namely, $\Delta$ is set as described below.

$$\Delta = 360/(6 \times P/2) = 12 \text{ [deg]}$$

This means that in this embodiment, the angle of skew $\Delta$ two times as large as the angle of skew $\Delta c$ for suppressing the cogging torque is set. Therefore, according to this embodiment, not only the torque ripple can be sufficiently reduced, but also the cogging torque can be suppressed. Further, since the number of the stacked stages N is 3 in this embodiment, for the cogging torque, the secondary harmonic component can be cancelled in addition to the basic wave component.

As described above, according to this embodiment, in the permanent magnet field type three-phase brushless motor, both the cogging torque and the torque ripple can be sufficiently suppressed. Accordingly, the brushless motor according to this embodiment is used in the electric power steering device as a driving source so that a steering feeling can be improved.

In this embodiment, the number of poles P is set to 10 and the number of slots is set to 12, however, the present invention is not limited thereto and may be effectively applied to other combinations of the number of poles P and the number of slots S that can be selected in the three-phase brushless motor. Now, an explanation will be given to this point.

As apparent from the above-described explanation, the angle of skew $\Delta$ given by the equation (1) is set on the assumption that the three-phase brushless motor is used, however, the number of poles P and the number of slots S are not limited. Thus, as for the combinations of the number of poles P and the number of slots S that can be selected in the three-phase brushless motor, the relation between the angle of skew $\Delta c$ given by the equation (18) and the angle of skew $\Delta$ given by the equation (1) in this embodiment will be studied.

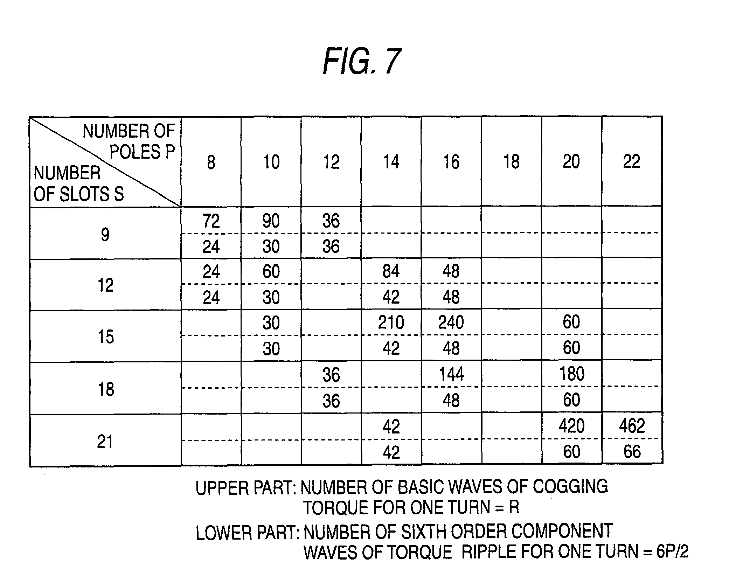

Fig. 7 shows the number of basic waves of the cogging torque included in one rotation of the rotor (the number of cycles of the basic waves of the cogging torque corresponding to one rotation of the rotor) and the number of the sixth order components of the torque ripple included in one rotation of the rotor (the number of cycles of the sixth order components of the torque ripple corresponding to one rotation of the rotor) for each of the combinations of the number of poles P and the number of slots S that can be selected in the three-phase brushless motor. The former is referred to as "the number of basic waves of the cogging torque for one rotation", and the latter is referred to as "the number of the sixth order component waves of the torque ripple for one rotation", hereinafter. The number of the basic waves of the cogging torque for one rotation is equal to the least common multiple R of the number of poles P and the number of slots S and described in an upper part of a column corresponding to each of the combinations of the number of poles P and the number of slots S in Fig. 7. The number of the sixth order component waves of the torque ripple for one rotation is equal to 6P/2 and described in a lower part of a column corresponding to each of the combinations of the number of poles P and the number of slots S in Fig. 7. The combinations of the number of poles P and the number of slots S that cannot be selected in the three-phase brushless motor are blank in Fig. 7.

As can be understood from Fig. 7, for any of the combinations of the number of poles P and the number of slots S that can be selected in the three-phase brushless motor, the number of the basic waves of the cogging torque for one rotation (R) is integer times as large as the number of the sixth order component waves of the torque ripple for one rotation (6P/2). This means that the angle of skew $\Delta = 360/(6P/2)$ in this embodiment corresponds to a value integer times as large as the cycles of the basic waves of the cogging torque 360/R. Further, as described above, when the angle of skew $\Delta$ is set to $\Delta = 360/ (6P/2)$, the fifth order harmonic component and the seventh order harmonic component that generate the sixth order components of the torque ripple, of the harmonic components of the induced voltage are greatly reduced. Accordingly, when the angle of skew $\Delta$ is set to $360/ (6P/2)$ as in this embodiment, as for any of the combinations of the number of poles P and the number of slots S that can be selected in the three-phase brushless motor, not only the sixth order components of the torque ripple are sufficiently suppressed, but also the basic wave components of the cogging torque are cancelled. Further, as described above, in this embodiment, since the number of stacked stages of the segment magnets in the rotor is set to 3 (Fig. 3), the secondary harmonic component the included quantity of which is relatively large in the high order components of the cogging torque is also cancelled.

<4. Modified example>

In the above-described embodiment, the number of the stacked stages of the segment magnets N of the rotor is set to 3, however, the present invention is not limited thereto. As described above, when the number of the stacked stages is 3 or more, the same effects as those of the above-described embodiment are obtained.

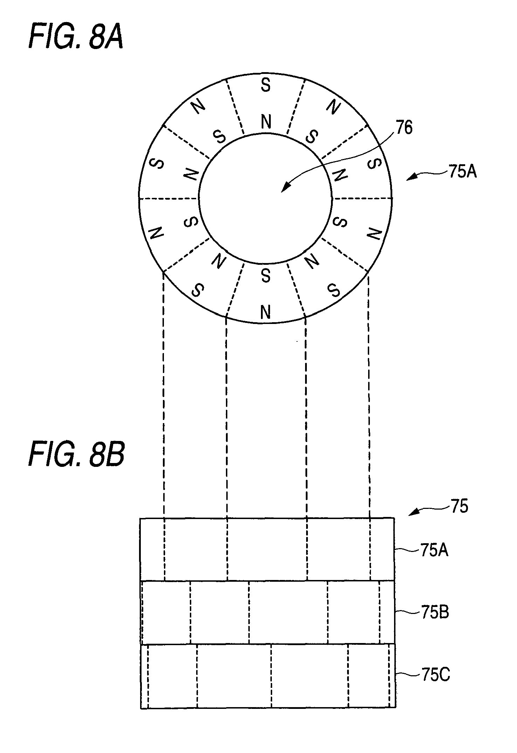

Further, in the above-described embodiment, as the permanent magnet in the rotor 65, the segment magnets are used and arranged to have a stacked structure for the skew process (Fig. 3 and Fig. 4). Ring magnets may be used respectively in the stages of the stacked structure in place of the segment magnets. That is, in the brushless motor 6, for instance, a rotor 75 having a structure that three ring magnets 75A, 75B and 75C are laminated around a motor shaft 76 may be used in place of the rotor 65 as shown in Fig.8. Here, Fig.8A is a plan view showing the rotor 75 and Fig. 8B is a side view showing the rotor 75. In this rotor 75, the three ring magnets 75A, 75B and 75C that have the same structure and are concentrically arranged form an annular magnet part. The three ring magnets 75A, 75B and 75C are respectively arranged so that boundaries of magnetic poles thereof are shifted by a prescribed rotating angle $\Delta/3$ in the circumferential direction. Specifically, the boundary of the magnetic pole of the second ring magnet 75B (an intermediate stage) is shifted by the rotating angle $\Delta/3$ relative to the boundary of the magnetic pole of the first ring magnet 75A (an upper stage). The boundary of the magnetic pole of the third ring magnet 75C (a lower stage) is shifted by a rotating angle $2\Delta/3$ thereto. In the brushless motor having the rotor 75 of such a structure, when the above-described $\Delta$ is set as shown by the equation (1), the same effects as those of the above-described embodiment can be obtained.

The embodiments described above are to be regard as illustrative rather than restrictive. Variations and changes may be made by others, and equivalents employed, without departing from spirit of the present invention. Accordingly, it is intended that all variation, changes and equivalents which fall within the spirit and scope of the present invention as defined in the claims be embraced thereby.

In a three-phase brushless motor, a rotor has a stacked structure including first to third stages which include segment magnets to which a skew process is applied. When the number of poles P in the circumferential direction is set to P, an angle of skew is set to $\Delta = 360/(6P/2)$ [deg]. That is, the magnet segments are respectively arranged so that the magnet segment of the second stage is shifted by a rotating angle of $\Delta/3$ in the circumferential direction from the magnet segment of the first stage and the magnet segment of the third stage is shifted by a rotating angle of $2\Delta/3$ in the circumferential direction.

**Claims**

1. A permanent magnet field type brushless motor comprising:

   a rotor including an annular magnet part in which different magnetic poles alternately appear in a circumferential direction; and
   a stator arranged concentrically with the rotor and including a three-phase winding,

   wherein the magnet part is divided into N stages in an axial direction of the rotor and positions thereof in the circumferential direction are respectively shifted between the stages to give a skew of a prescribed angle $\Delta$ to the magnet part, the number N of the stages of the magnet part is 3 or more and the prescribed angle $\Delta$ is given by a below-described equation,

$$\Delta = 360/(6 \times P/2)$$

   where P is the number of the magnetic poles in the circumferential direction.

2. The brushless motor according to claim 1, wherein the stages adjacent in the axial direction of the rotor in the magnet part are shifted by a rotating angle of $\Delta/N$ in the circumferential direction from each other.

3. The brushless motor according to claim 1 or 2, wherein each stage of the magnet part includes a plurality of magnet segments arranged in an annular form in the circumferential direction.

4. The brushless motor according to claim 1 or 2, wherein each stage of the magnet part includes a ring magnet integrally formed in a ring shape and magnetized so that the different magnetic poles alternately appear in the circumferential direction.

5. An electric power steering device comprising:

   the brushless motor according to any one of claims 1 to 4, wherein the brushless motor is driven in accordance with a steering operation of a vehicle to give a steering assist force to a steering mechanism of a vehicle.

# FIG. 1

# FIG. 2

# FIG. 3

*FIG. 4A*

*FIG. 4B*

*FIG. 4C*

*FIG. 5A*

COGGING TORQUE FOR ONE CYCLE

*FIG. 5B*

COGGING TORQUE FOR ONE CYCLE

## FIG. 6A

COGGING TORQUE FOR ONE CYCLE

## FIG. 6B

COGGING TORQUE FOR ONE CYCLE

## FIG. 7

| NUMBER OF POLES P / NUMBER OF SLOTS S | 8 | 10 | 12 | 14 | 16 | 18 | 20 | 22 |
|---|---|---|---|---|---|---|---|---|
| 9 | 72 | 90 | 36 | | | | | |
|   | 24 | 30 | 36 | | | | | |
| 12 | 24 | 60 | | 84 | 48 | | | |
|    | 24 | 30 | | 42 | 48 | | | |
| 15 | | 30 | | 210 | 240 | | 60 | |
|    | | 30 | | 42 | 48 | | 60 | |
| 18 | | | 36 | | 144 | | 180 | |
|    | | | 36 | | 48 | | 60 | |
| 21 | | | | 42 | | | 420 | 462 |
|    | | | | 42 | | | 60 | 66 |

UPPER PART: NUMBER OF BASIC WAVES OF COGGING
TORQUE FOR ONE TURN = R

LOWER PART: NUMBER OF SIXTH ORDER COMPONENT
WAVES OF TORQUE RIPPLE FOR ONE TURN = 6P/2

FIG. 8A

76

75A

FIG. 8B

75

75A

75B

75C

**European Patent Office**

**EUROPEAN SEARCH REPORT**

Application Number

EP 08 15 2392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/062683 A1 (UGAI YOSHIKAZU [JP] ET AL) 23 March 2006 (2006-03-23) * paragraphs [0056], [0071], [0087]; figures 1-29 * | 1-5 | INV. H01F41/02 H02K1/27 H02K29/03 |
| Y | DE 10 2004 030831 A1 (MITSUBISHI ELECTRIC CORP [JP]) 20 January 2005 (2005-01-20) * paragraphs [0005], [0011], [0066] * | 1-4 | |
| Y | JP 2006 021550 A (TOYODA MACHINE WORKS LTD) 26 January 2006 (2006-01-26) * abstract; figures 1-5 * | 5 | |
| Y | JP 2006 230189 A (HITACHI LTD) 31 August 2006 (2006-08-31) * figures 1,14,23 * | 1-4 | |

TECHNICAL FIELDS SEARCHED (IPC)

H01F
H02K

The present search report has been drawn up for all claims

| Place of search | Date of completion of the search | Examiner |
|---|---|---|
| Munich | 9 July 2008 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 15 2392

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2008

| Patent document cited in search report | | Publication date | Patent family member(s) | | Publication date |
|---|---|---|---|---|---|
| US 2006062683 | A1 | 23-03-2006 | CN | 1770603 A | 10-05-2006 |
| | | | DE | 102005043872 A1 | 20-04-2006 |
| | | | JP | 2006093301 A | 06-04-2006 |
| DE 102004030831 | A1 | 20-01-2005 | CN | 1578062 A | 09-02-2005 |
| | | | JP | 4089527 B2 | 28-05-2008 |
| | | | JP | 2005020930 A | 20-01-2005 |
| | | | US | 2005012419 A1 | 20-01-2005 |
| JP 2006021550 | A | 26-01-2006 | NONE | | |
| JP 2006230189 | A | 31-08-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004180491 A

• JP 2004248422 A